(19) **Europäisches Patentamt**
**European Patent Office**
**Office européen des brevets**

(11) **EP 4 393 973 A1**

(12) **EUROPEAN PATENT APPLICATION**

(43) Date of publication:
**03.07.2024 Bulletin 2024/27**

(21) Application number: **22020628.8**

(22) Date of filing: **28.12.2022**

(51) International Patent Classification (IPC):
**C08G 8/10** *(2006.01)*          **C08G 8/28** *(2006.01)*
C08H 7/00 *(2011.01)*          C09J 161/06 *(2006.01)*
C09J 161/12 *(2006.01)*

(52) Cooperative Patent Classification (CPC):
(C-Sets available)
**C08G 8/10; C08G 8/28; C08H 6/00;** C09J 161/06;
C09J 161/12                                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Prefere Resins Holding GmbH**
**15537 Erkner (DE)**

(72) Inventors:
• **Prock, Christoph**
**3910 ZWETTL (AT)**

• **Peterschofsky, Karin**
**3500 KREMS (AT)**
• **Hanifogl, Roland**
**3500 KREMS (AT)**
• **Winter, Johannes**
**58239 SCHWERTE (DE)**

(74) Representative: **Deckers, Hellmuth Alexander**
**Kanzlei Dr. Deckers**
**Breitbachstrasse 15**
**55218 Ingelheim am Rhein (DE)**

(54) **LOW EMISSION PHENOLIC RESINS**

(57)     The invention is directed to a phenolic resin composition **C** comprising at least one of (a) phenolic resins **R** made from phenolic compounds **P** and aldehydes **A,** (b) condensation products R' of lignin **L** or tannin **T,** optionally together with phenolic compounds **P,** with aldehydes **A,** and (c) mixtures of phenolic resins **R** and condensation products **R',** and at least one scavenger composition **S** which scavenger composition comprises at least one compound selected from the group consisting of cyclic carbamide compounds **S1**, linear or branched carbamide compounds **S2,** thiocarbamide compounds **S3,** and imidocarbamide compounds **S4,** to a process for its preparation, and to the use for the preparation of binders for glass or mineral fibres, as fillers for laminates, as binders or adhesives in composite wood materials, such as wood based boards, plywood, laminated veneer lumber "LVL", as impregnant, as binder in coatings, in insulation foam, in floral foam, as foundry resins, in abrasive materials, in bonded abrasive materials, in friction materials, for refractory materials, and in moulding compounds.

EP 4 393 973 A1

(52) Cooperative Patent Classification (CPC): (Cont.)

C-Sets
**C09J 161/06, C08K 5/21;**
C09J 161/06, C08L 61/12, C08K 5/21;
C09J 161/12, C08K 5/21

# EP 4 393 973 A1

**Description**

Field of the Invention

The invention relates to phenolic resins having a reduced emission level for aldehyde compounds, to a method of their preparation, and to the use thereof.

Background of the Invention

Phenolic resins and other materials containing these may give rise to emissions of the monomers used, usually phenol (hydroxybenzene) and formaldehyde. Such emissions can be caused by residual monomers present in the resins or materials, depending on the partial vapour pressures of these monomers, or by subjecting phenolic resins and other materials containing these to heat, caused by thermally induced depolymerisation of the resins. A plethora of additives has been described, classified into adsorbents and scavengers, which reduce such emissions. As adsorbents such as, e. g., alumina, montmorillonite, or nanoparticles physically bind the monomers present, but only retard their release, preference is usually given to scavengers which undergo chemical reactions with the residual monomers, and thereby reduce their concentration in the resins or in materials containing these. Inorganic scavengers are, e. g., sodium sulphite $Na_2SO_3$, sodium metabisulphite $Na_2S_2O_5$, and graphene oxide, and oxydants such as ammoniumpersulphate and sodium percarbonate. Among organic compounds, the nitrogen-containing compounds of the families of carbamides, amidines, and imines, such as urea, melamine, cyanoguanidine, alkanolamines such as ethanolamine or diethanolamine, and hydroxyaromatics such as resorcinol or tannins have been used. These scavengers are discussed, inter alia, in "Low Formaldehyde Binders for Mineral Wool Insulation", T. M. Bennet et al., Global Challenges vol. 6, April 2022, https://doi.org/ 10.1002/gch2.202100110.

State of the Art

In DE 1520 951 A1, phenol-modified amine-aldehyde resins based on urea and formaldehyde are disclosed, where partial or complete substitution of urea by thiourea has been described. In DE 23 63 357 A1, a process is described for the preparation of curable condensation resins from phenol and/or its derivatives in the presence of basic catalyst at elevated temperature, where up to 60 % of the amount of substance of phenol may be replaced by aminoplast formers, and wherein the ratio of the amount of substance of phenol to the amount of substance of formaldehyde is from 1 mol/ 1 mol to 1 mol / 3 mol, when using phenol or its derivatives, and when additionally using aminoplast formers, the ratio may be up to 1 mol 14 mol. Among the aminoplast formers, thiourea is also mentioned.

In the patent application GB 359944 A, compositions are described comprising cellulose derivatives and artificial resins chosen from condensation products of urea, or a derivative thereof such as thiourea or mixtures thereof, or of a phenol, with formaldehyde, or of condesation products of organic dicarboxylic acids with polyhydric alcohols.

In the patent application GB 413439 A, carbamide-formaldehyde condensation products are disclosed when the primary condensation solution is further condensed with addition of substances capable of undergoing condensation with the solution, such as urea, thiourea, dicyandiamide, phenol, aromatic acid amides or sulphamides, like benzamide or toluenesulphamide.

In the patent application GB 423444 A, an alkali polysulphide is reacted with an alkali metal or alkaline earth metal with such proportion of formaldehyde or compound of an alkali hydrogen sulphite and formaldehyde as a the first constituent, as is also sufficient to react with additional organic material, namely a phenol, an amine, or casein to produce the second constituent of different type and in intimate admixture with the first constituent.

In the patent application GB 469 677 A, manufacture of non-resinous aldehyde condensation products is described by causing formaldehyde or a polymer thereof or substances that yield formaldehyde to react with an aminotriazine or a derivative thereof containing at least one replaceable hydrogen atom and interrupting the reaction before the stage at which resinous condensation products are formed. Triazines may, however, be mixed with any known compound capable of forming aldehyde resins such as phenols, urea, thiourea, aniline or the like, or a mixture of any of these.

In the patent application GB 475 072 A, condensation products of aldehydes and triazines having at least one and up to three hydrazyl groups $H_2N-NH-$ bound to a carbon atom of a 2,4,6-triazine, where beside the triazine compound, other compounds which are capable of condensing with aldehydes may be added to the condensation mixture, for example, urea, thiourea, substituted ureas, polymethylene ureas, dicyandiamide, sulphonamides, aminobenzenes, and phenols.

In the patent application GB 496125, adhesives, particularly glues and sizes of excellent dry and wet strength are obtained by adding to urea-formaldehyde condensation products spreading agents or fillers which are laden with substances which react with the former, if necessary under the action of condensing agents. Such fillers or spreading agents consist in particular of wood meal which are laden with compounds which react with the urea-formaldehyde condensation product. Among substances which are suitable for loading the fillers or spreading agents there may be mentioned for example the compounds obtained by the polymerisation of unsaturated acid amides or acid amides, and the substances obtainable by the condensation of urea or thiourea with aldehydes or alcohols, and substances obtained by the degradation of albumine.

In the patent application GB 506 507 A, cocondensation products are described derived from aldehydes and compounds of the general formula $[H_2N - C(X) -NH-]_2 R$, where X may be O or S, and R is a divalent alkylene or arylene group, and additionally, other substances which can be condensed with aldehydes such as the urea, thiourea, substituted ureas, dicyandiamide, sulphonamides, carboxylic acid amides, amines, phenols, aminodi- and aminotriazines and the like may be added to the reaction mixture. The products may be cast or pressed in the industry of plastic masses, or used as binding agents for the production of moulded or laminated products, also for adhesives, especially in the woodworking industry; as lacquer binding-agents or additives to lacquers; or in the textile industry for dressing, anti-creasing, matting and the like.

In the patent application GB 518 858 A, improved artificial resin products are disclosed which are hardenable at normal temperatures, and can be obtained by mixing at normal or moderate temperature water insoluble urea-formaldehyde and/or thiourea-formaldehyde condensation products with phenol resols and hardening catalysts.

In the patent application GB 567 063, a guanamine-aldehyde condensate is disclosed where the alkyl group bound to a carbon atom of the triazine ring is a branched chain aliphatic alkyl group having at least seven carbon atoms. Resinous condensation products where mixtures of the guanamines described therein with melamine, urea, or mixtures of melamine and urea, condensed with formaldehyde or other aldehydes are also mentioned. Other materials reactive with formaldehyde may also be admixed with the guanamines and the resulting mixtures condensed with an aldehyde. Among these other materials, phenol, aniline, dicyandiamide and thiourea are a few examples.

In the patent GB 572 829, a reactive product of an amine and dicyandiamide is disclosed which is prepared by heat treatment, under substantially anhydrous conditions and under pressures of from 1 bar to 3 bar (from 0.1 MPa to 0.3 MPa), of 1 mol of a primary aromatic amine with from 2 mol to 3.2 mol of dicyandiamide at a temperature and for a time sufficient to liberate a substantial quantity of ammonia, the reaction being conducted in the presence of zinc chloride as catalyst, when the amount of substance of dicyandiamide is from 2 mol to 2.7 mol. The primary aromatic amine is preferably aniline or ortho-toluidine. In a subsequent condensation reaction with aldehydes, other resin forming materials reactive with aldehydes may be mixed with the said reactive products, such as phenol, urea, thiourea, and aminotriazines such as melamine.

In the patent GB 589 131, a method is described for preparing a dry layer comprising a heat-setting adhesive that remains stable for an extended period, which comprises applying to a surface an aqueous solution of a urea-formaldehyde condensation product together with an ammonium salt of an acid strong enough to cause hardening of the urea-formaldehyde condensation product and a quantity of a polyhydric phenol in excess of any amount that will combine with all the free formaldehyde that may be present, and drying. The aqueous solution of a urea-formaldehyde condensation product is prepared by condensing urea and formaldehyde in aqueous solution to produce an aqueous solution of condensation product containing the usual content of free formaldehyde, and then, reacting such free formaldehyde with a formaldehyde-fixing agent. A formaldehyde-fixing agent is defined here as a substance that "fixes" formaldehyde, i.e., reacts with formaldehyde to produce a relatively stable product. Formaldehyde-fixing agents that may be employed are melamine, polyhydric phenols such as resorcinol, catechol, quinol, pyrogallol, oxyhydroquinone, phloroglucinol, and their methyl derivatives, but the preferred fixing agents are urea and thiourea. The reaction with the free formaldehyde in the solution with a fixing agent may take several hours, and is preferably carried out in a substantially neutral solution.

In the patent GB 593 372, liquid resins are disclosed which can be used as adhesives or binding agents and which, after hardening, possess greatly improved resistance to water and moisture, as compared with known urea-formaldehyde type resinous condensation products. This improved resistance to water is obtained by incorporating a phenolic material as hereinafter defined in the urea-formaldehyde resin. The expression "phenolic material" means phenol, its homologues and mixtures thereof, capable of reaction with formaldehyde to form resinous condensation products, resorcinol, as well as reactive, fusible or liquid, resinous condensation products thereof with formaldehyde.

In the patent GB 772 475, a process of manufacturing a resin is disclosed, comprising the steps of mixing an aldehyde selected from the group consisting of formaldehyde, a mixture of formaldehyde and acetaldehyde, a mixture of formaldehyde and no more than 50 % of acrylaldehyde, and a mixture of formaldehyde and no more than 25 % of glyoxal, the amount of acrylaldehyde or of glyoxal being calculated on the amount of mols of aldehyde, and urea, said starting materials being in the proportion of 2 mol to 2.4 mol of aldehyde or aldehyde mixture per 1 mol of urea and the pH value of the mixture at the beginning of the reaction being adjusted to between 6.9 and 8.0, heating the mixture for between 1 hour to 9 hours to produce a precondensate while maintaining the pH value above 6.1 and below 6.85, this last pH value being measured twenty minutes after a sample has been taken when it has cooled to a temperature of 18 °C, removing the major proportion of water present in the precondensate, lowering the pH value of the precondensate to below 5.1, adding an alcohol containing at least three carbon atoms to the precondensate and effecting etherification and further condensation in a vacuum whereby a resin results.

In the patent GB 801 300, a method is disclosed of making a rubber article reinforced with a cord bonded to the rubber by means of an adhesive characterised by the step of dipping the cord in a relaxed condition in a a first dip comprising a dilute adhesive until the cord is wetted throughout, partially drying the cord to set the solids sufficiently to inhibit penetration of solids from a second dip, dipping the partially dried cord in a second dip comprising the same adhesive as the first dip, together with an adhesive-bond-preserving agent, drying the cord to set the solids on the surface of the cord, embedding the cord in rubber and vulcanising the assembly under heat and pressure until the cord is secured in bonded relationship with the rubber. The first dip is an aqueous solution of a resin-forming material, preferably a heat-hardenable aldehyde resin, and especially preferred, a resin made from formaldehyde and phenol or resorcinol. The second dip comprises, in addition to the said resin-forming material, an adhesive-bond-preserving agent which may preferably be urea, but can also be thiourea, ethylene thiourea, amines such as disalicylal propylene diimine (IUPAC name: 2-[2-[(2-hydroxyphenyl)methylideneamino]propyliminomethyl]phenol), mixtures of N,N'-aryl disubstituted p-phenylene diamines, N,N'-diphenyl-pphenylene diamine, 2-mercaptobenzimidazole, o,o'-dihydroxy benzanilide, biuret, dithiobiuret, the resinous reaction product of aniline and formaldehyde, the reaction product of acrylonitrile and tetraethylene pentamine, and the reaction product of guaiacol, morpholine and formaldehyde and blends of these agents.

Object of the Invention

With regard to reduce, or completely avoid emissions of formaldehyde during the use of phenolic resins, particularly in the fields of adhesives, such as for wood materials, insulation materials, and also fibre-reinforced materials, it has been the object of the invention to provide compositions of phenolic resins with reduced emissions during curing and use, complying with the restrictions of formaldehyde release as laid down in the current European REACH regulation (mass density of formaldehyde in air of less than 0.124 mg/m$^3$, as determined according to EN 717-1). Although formaldehyde has successfully been replaced by other aldehydes in some applications such as wood-based panels, in combination with adapted hardeners, this replacement has frequently led to worse reactivity and consequently, a deterioration of properties such as strength, hardness, heat resistance, and water dilutability. Therefore, efficient formaldehyde scavengers are needed which lower the formaldehyde emissions during the use of phenolic resins where formaldehyde is used as one of the reactants, to a tolerable level.

Summary of the Invention

It has been found, in the investigations underlying the present invention, that phenolic resin compositions **C** that comprise

at least one of (a) phenolic resins **R** which are condensation products from at least one phenolic compound **P** with at least one aldehyde **A,** (b) condensation products **R'** of at least one of the naturally occurring hydroxyaromatic compounds lignin **L** and tannin **T,** optionally together with at least one of the said phenolic compounds **P,** with at least one aldehyde **A,** and (c) mixtures of one or more phenolic resins **R** and one or more condensation products **R',** and, as post-addition after the synthesis of the resins **R** and **R',**

at least one scavenger composition **S** which scavenger composition **S** comprises at least one compound selected from the group consisting of cyclic carbamide compounds **S1** having at least one -C(O)-N< group, linear or branched carbamide compounds **S2** having at least one -C(O)-N< group, thiocarbamide compounds **S3** having at least one -C(S)-N< group, and imidocarbamide compounds **S4** having at least one -C(NH)-N< group,

with the proviso that if urea is present in the scavenger composition **S,** there must be at least one further compound present in the scavenger composition **S,** which further compound is different from urea, and is selected from any of the groups **S1, S2, S3,** and **S4.**

Detailed Description of the Preferred Embodiments

The phenolic resin compositions **C** comprise

- at least one of

(a) phenolic resins **R** which are condensation products from at least one phenolic compound **P** with at least one aldehyde **A,**
(b) condensation products **R'** of at least one of the naturally occurring hydroxyaromatic compounds lignin **L** and tannin **T,** optionally together with at least one of the said phenolic compounds **P,** with at least one aldehyde **A,** and

(c) mixtures of one or more phenolic resins **R** and one or more condensation products **R'**

- at least one scavenger composition **S** which scavenger composition **S** comprises at least one compound selected from the group consisting of

  - cyclic carbamide compounds **S1** having at least one -C(O)-N< group,
  - linear or branched carbamide compounds **S2** having at least one -C(O)-N< group,
  - thiocarbamide compounds **S3** having at least one -C(S)-N< group, and
  - imidocarbamide compounds **S4** having at least one -C(NH)-N< group,

with the proviso that if urea is present in the scavenger composition **S,** there must be at least one further compound present in the scavenger composition **S,** which further compound is different from urea, and is selected from any of the groups **S1, S2, S3,** and **S4.**

The term "condensation products", as used herein, refers to reaction products of hydroxyaromatic or alkoxyaromatic compounds H-Ar"-O-Y which have at least one unsubstituted hydrogen atom H in an aromatic nucleus of Ar'-O-Y which also carries the -O-Y group, where Ar'- = H-Ar"-, and Y is hydrogen for a hydroxyaromatic compound, or Y is an (optionally substituted) alkyl group for an alkoxyaromatic compound, with aldehydes X-C(H)=O, where X can be hydrogen, or an optionally substituted alkyl group, or a further aldehyde group.

The term "scavenger compound" or "formaldehyde scavenger compound" as used herein relates to any compound which can be added to a mixture in order to remove, or to deactivate impurities, unwanted reaction products, or remaining starting products, and which reacts by fixing an aldehyde, or particularly, formaldehyde, by a chemical reaction.

A "scavenger composition" **S** as used herein comprises at least one scavenger compound.

The compounds comprised in the scavenger composition **S** may be selected only from one of the groups **S1, S2, S3,** and **S4,** or they may be selected from two or more of these groups.

In a preferred embodiment, the phenolic resin composition comprises resoles having a ratio $n_A / n_P$ of the amount of substance $n_A$ of aldehyde(s), preferably formaldehyde, and the amount of substance $n_P$ of phenol(s) **P,** preferably phenol = hydroxybenzene, within a broad range of preferably $1.0 \leq n_A / n_P \leq 6.0$, more preferred, $1.1 \leq n_A / n_P \leq 5.0$, which resoles can preferably be used as phenolic resins **R.** Further preferred embodiments relate to condensation products **R'L** of mixtures of phenols **P** and lignin **L** with aldehydes **A,** to condensation products **R'T** of phenols **P** and tannin **T** with aldehydes **A,** and to condensation products **R'LT** of mixtures of phenols **P,** lignin, and tannin, with aldehydes **A,** preferably with formaldehyde as aldehyde compound **A.**

Phenolic compounds **P** that can be used in the invention are preferably selected from the group consisting of phenol (hydroxybenzene) itself, ortho-, meta-, and para-cresol, 2,4-xylenol, 2,6-xylenol, 2,4,6-alkylphenols having at least one linear or branched alkyl group in at least one of the 2-, 3-, or 4-positions relative to the hydroxyl group with from two to twenty carbon atoms in the alkyl group(s), which may optionally have at least one olefinic unsaturation in the alkyl group(s), alkoxy phenols having at least one linear or branched alkoxy group in at least one of the 2-, 3-, or 4-positions relative to the hydroxyl group with from two to six carbon atoms in the alkoxy group, resorcinol, 1-naphthol, 2-naphthol, 1,2-naphthalenediol, 1,3-naphthalenediol, 2,3-naphthalenediol, 1,5-naphthalenediol, 1,6-naphthalenediol, 1,8-naphthalenediol, bisphenol A, and mixtures of these. Most preferred are phenol, and mixtures of phenol with any one or more of the above.

Aldehydes **A** that can be used in the invention are preferably selected from the group consisting of aliphatic monoaldehydes Al-CHO having from one to six carbon atoms in the linear or branched aliphatic group Al, preferably formaldehyde, acetaldehyde, propionaldehyde, and n-butyraldehyde, aliphatic dialdehydes OHC-Al'-CHO where Al' stands for a linear or branched alkylene group having from one to six carbon atoms, or for a direct bond, preferably glyoxal (where Al' is a direct bond), succinaldehyde and glutaraldehyde, cyclic aldehydes such as furfural (furan-2-carbaldehyde), furane-2,5-dicarbaldehyde, and 5-hydroxymethylfurfural (5-(hydroxymethyl)furan-2-carbaldehyde). Most preferred are formaldehyde, and mixtures of formaldehyde with any one or more of the above aldehydes.

Lignins L that can be used in the invention comprise the groups of softwood, hardwood, and grass lignins. These native lignins are typically separated from the wood in the form of "milled wood lignin" (MWL), "dioxane lignin", or "enzymatically liberated lignin". Preferred are the industrially based technical lignins which are by-products of chemical pulping: Kraft lignin (or sulphate lignin), alkali lignin (or soda lignin), and lignosulphonates are derived from the Kraft, the soda-anthraquinone, and sulphite pulping processes of wood. Hydrolysis lignin is a by-product from pre-treatment processes in cellulosic ethanol plants, using water and water-ethanol mixtures, with basic or acidic catalysts. It is mainly composed of lignin up to a mass fraction of about 60 %, the rest is unreacted cellulose, monosaccharides, and oligosaccharides. A further lignin source is the so-called acid hydrolysis lignin where lignocellulosic biomass is subjected to two sequential hydrolysis steps, the first step using aqueous sulphuric acid with a concentration of 12 mol/L at ambient temperature (30 °C) to disrupt the crystalline cellulose structure, and the second step using dilute aqueous sulphuric acid with a concentration of about 0.4 mol/L at about 120 °C to convert polysaccharides to sugars, and also partially hydrolyse the lignin component. Other lignin grades have been made accessible by newer processes, viz., the organosolv process which provides a sulphur-free high purity lignin grade, and the hydrolysis process which is acid-catalysed and leads to formation of the so-called Hibbert ketones and of free phenolic moieties. Other emerging processes are the steam-explosion process and the ammonia-fibre expansion process. Any of these lignin materials may be used in the present invention.

It is also possible to generate fractions of high molar mass lignin, and low molar mass lignin by fractionated precipitation, see WO 2013/144 453 A1. These lignin fractions may be collected, e. g., in a first mixture comprising substantially lignin oligomers and polymers of a low degree of polymerisation (hereinafter each individually, and all collectively referred to as low molar mass lignins, "LML") having from 1 to 10 monomer units, and in a second mixture comprising substantially lignin polymers (hereinafter collectively referred to as high molar mass lignins, "HML") having from 11 to 70 monomer units. Any larger number of mixtures, each comprising different groups of oligomers and polymers, may also be collected from the isolated fractions provided by controlled precipitation, or other separation processes. The molar masses of lignin can be determined according to the method described in Linping Wang et al., Holzforschung 2019; 73(4): 363 to 369, by size-exclusion chromatography of acetylated samples of the lignin fractions. These mixtures can be condensed individually with aldehydes, and mixed thereafter, or they can be condensed in sequence, and the addition time of phenol and aldehyde can be varied. In WO 2013/144 453 A1, variations of the condensation process lead to different levels of the possibility of substitution of phenol by lignin.

Preferred among the lignins L are the commercially available types, viz., Kraft lignin (or sulphate lignin), alkali lignin (or soda lignin), hydrolysis lignin, including the so-called acid hydrolysis lignin, organosolv lignin, steam-explosion lignin, and ammonia-fibre expansion lignin.

Tannins T that can be used in the invention are a class of polyphenolic compounds that share a property, viz. binding to, and precipitation of, proteins and other classes of organic compounds such as amino acids and alkaloids. Their molar mass ranges from about 500 g/mol for esters of sugars and gallic or digallic acid, to about 20 kg/mol for proanthocyanidines. Basic chemical structures are derived from gallic acid (3,4,5-tri-hydroxybenzoic acid), 1,3,5-trihydroxybenzene (phloroglucinol), and flavan-3-ol. Naturally occurring tannins are found in leaf, bud, seed, root, and stem tissues. A structural differentiation for tannins has been proposed by Khanbabee and van Ree in Natural Product Reports 2001, vol. 18, pages 641 to 649, as Gallotannins, Ellagitannins, Complex Tannins and Condensed Tannins. Gallotannins are ester of gallic acid or its depsidic derivatives with (mostly sugar-based, catechin-based or terpenoid-based) polyols, Ellagitannins comprise acidic components based on ellagic acid (2,3,7,8-tetrahydroxy-chromeno{5,4,3,c,d,e}chromene-5,10-dione) and do not contain glycosidically linked catechin units, Complex Tannins are those in which a catechin unit is bound glycosidically to a gallotannin or ellagitannin unit, and Condensed Tannins are all oligomeric and polymeric proanthocyanidines formed via linkage of the C4-atom of one catechin unit with a C8- or C6-atom of the next monomeric catechin unit. The sugar-based polyols include, i. a., D-glucopyranose, D-hamamelose, sucrose, shikimic acid, and quercitols. They all comprise both phenolic and cycloaliphatic hydroxyl groups. Naturally occurring tannins are usually mixtures of at least two of these four classes.

Cyclic carbamides S1 have at least one carbamide -C(O)-N< group in a ring structure, and preferably at least two >NH groups in their molecule. Preferred among these are monocylic carbamides such as ethyleneurea and propyleneurea, and bicyclic carbamide compounds such as glycoluril (tetrahydroimidazo[4,5-*d*]imidazole-2,5(1H,3H)dione), and 1,2-ethylidene bis-(imidazolidine-N-yl) which can be prepared from triethylenetetramine and an alkyl carbonate.

Linear or branched carbamides S2 have at least one carbamide -C(O)-N< group, and preferably at least two >NH groups in their molecule. Preferred among these are urea, alkylated ureas with $C_1$- to $C_9$- linear or branched alkyl groups such as N-methylurea, N-ethylurea, 1,1-dimethylurea, 1,3-dimethylurea, 1,1-diethylurea, 1,3-diethylurea, 1,1-di-n-butylurea, 1,3-di-n-butylurea, biuret (2-imidodicarbonic diamide) $H_2N$-C(O)-NH-C(O)-$NH_2$, and triuret (2,4-diimido-tricarbonic diamide) $H_2N$-[C(O)-NH-$]_3$-H, and also bisamides of aliphatic dicarboxylic acids such as oxalic acid, malonic acid, succinic acid, glutaric acid, and adipic acid.

Compounds S3 have at least one thiocarbamide group -C(S)-N< in their molecule, and preferably at least two >NH groups. Preferred compounds S3 include thiourea, alkylated thioureas with $C_1$- to $C_9$- linear or branched alkyl groups such as N-methylthiourea, N-ethylthiourea, 1,1-dimethylthiourea, 1,3-dimethylthiourea, 1,1-diethylthiourea, 1,3-diethylthiourea, 1,1-di-n-butylthiourea, 1,3-di-n-butylthiourea, thioethylene urea (imidazoline-2-thiol), thiopropylene urea (4-methyl-imidazolidine-2-thione), dithioglycoluril (tetrahydro-imidazo[4,5-d]imidazole-2,5(1H,3H)-dithione), dithiobiuret (2-imido-1,3-dithiodicarbonic diamide), trithiotriuret (2,4-diimido-1,3,5-trithiotricarbonic diamide) and carbamodithioc acid, salts thereof, and esters thereof with alkanols having from six to twenty carbon atoms, and esters of alkanols having from six to twenty carbon atoms with alkylenebisdithiocarbamates having alkylene groups of from two to six carbon atoms.

Compounds S4 have at least one iminocarbamide or amidine group -C(NH)-N< in their molecule, and preferably at least two >NH groups. Preferred compounds S4 include formamidine H-C(NH)-$NH_2$, acetamidine $CH_3$-C(NH)-$NH_2$, bisamidines of dicarboxylic acids such as succinic acid, glutaric acid, adipic acid, guanidine $H_2N$-C(NH)-$NH_2$, alkylated guanidines with $C_1$- to $C_9$- linear or branched alkyl groups such as N-methylguanidine, N-ethylguanidine, 1,1-dimethylguanidine, 1,3-dimethylguanidine, 1,1-diethylguanidine, 1,3-diethylguanidine, 1,1-di-n-butylguanidine, 1,3-di-n-butyl-

guanidine, aminoguanidine, dicyandiamide (cyanoguanidine $(H_2N)_2$ C=N-C≡N), biguanide (imidodicarbonimidic diamide $H_2N$-C(NH)-N(H)-C(NH)-$NH_2$), and 1,2-diaminoguanidine $H_2N$-N(H)-C(NH)-N(H)-$NH_2$, and also cyclic amidines such as melamine (1,3,5-triamino-2,4,6-triazine), aryl triazines like benzoguanamine (6-phenyl-1,3,5-triazine-1,4-diamine), and alkyl triazines like formoguanamine (1,3,5-triazine-2,4-diamine), acetoguanamine (6-methyl-1,3,5-triazine-2,4-diamine), and caprinoguanamine (6-nonyl-1,3,5-triazine-2,4-diamine).

It is, of course, also possible to use formaldehyde scavengers having more than one kind of carbamide groups, viz., one carbamide group -C(O)-N<, and one amidine group -C(NH)-N<, or one thiocarbamide group -C(S)-N<, and one amidine group -C(NH)-N<, in addition to the preferably at least two >NH groups in their molecule.

In a preferred embodiment, where urea is used as one of the compounds **S2** in the scavenger composition **S,** one or more of compounds **S1, S2** (any compound of that group **S2** other than urea), **S3,** and **S4** are admixed thereto so that the mass fraction of urea $w_U$ in these mixtures of compounds ranges from 0.5 % to 99.5 %, and the sum $w_{S'} = w_{S1} + w_{S2} + w_{S3} + w_{S4}$ of the mass fractions of the other compounds selected from the group consisting of compounds **S1, S2, S3** and **S4,** individually referred to as $w_{S1}$, $w_{S2}$, $w_{S3}$, and $w_{S4}$, ranges from 99.5 % to 0.5 %, the mass fractions $w_U$ and $w_{S'}$ in the mixture urea with th other compounds which is the scavenger composition used here, always adding up to 100 %.

Non-linear relationships were surprisingly found between the reduction of the emission of formaldehyde during use, in a heated chamber test, and the mass fractions $w_U$ and $w_S$. As an example, the best effect in formaldehyde scavenging was obtained for mixtures urea as scavenger compound **S2** with thiourea as scavenger compound **S3** in the following range :

$$0.5 \text{ g/kg} \le m(\text{thiourea})/m(\text{urea}) \le 500 \text{ g/kg,}$$

preferably,

$$1 \text{ g/kg} \le m(\text{thiourea})/m(\text{urea}) \le 400 \text{ g/kg,}$$

particularly preferred,

$$2 \text{ g/kg} \le m(\text{thiourea})/m(\text{urea}) \le 350 \text{ g/kg,}$$

and especially preferred,

$$5 \text{ g/kg} \le m(\text{thiourea})/m(\text{urea}) \le 200 \text{ g/kg.}$$

The optimum was found to be between 7 g/kg and 150 g/kg, in this case of using a mixture of thiourea and urea as scavenger composition **S.**

For all scavenger composition **S** cited here, the sum $w_S$ of the mass fractions of the individual scavenger compounds used in the composition **C,** is $w_S = m_S / (m_S + m_R + m_{R'})$, where $m_S$ is the sum of the masses of all scavenger compounds present in the scavenger composition **S,** $m_R$ is the mass of phenolic resins **R,** and $m_{R'}$ is the mass of condensation products **R'** each as present in the composition, is given by 0.5 g/kg $\le w_S \le$ 350 g/kg, preferably 1 g/kg $\le w_S \le$ 300 g/kg, and particularly preferred, 5 g/kg $\le w_S \le$ 250 g/kg.

Suprisingly, it was found that emissions of ammonia ($NH_3$) originating from hexamethylenetetramine when used as (additional) curing agent were also reduced, for both resoles and novolaks.

The phenolic resin compositions **C** according to the present invention are preferably prepared by admixing the formaldehyde scavenger compounds, together as scavenger composition **S,** or consecutively as individual compounds belonging to the groups **S1, S2, S3,** or **S4,** to the phenolic resins **R,** the condensation products **R',** and/or their mixtures, or their solutions, after completion of the synthesis of **R,** or **R'.**

The compositions **C** according to the invention can be used as binders for glass or mineral fibres, as fillers for laminates, as binders or adhesives in composite wood materials, such as wood based boards, plywood, laminated veneer lumber "LVL", as impregnant, as binder in coatings, in insulation foam, in floral foam, in friction materials, as foundry resins, in abrasive materials, in bonded abrasive materials, for refractory materials, and in moulding compounds.

The invention is illustrated by the following examples which are not to be construed as limiting the scope of the invention.

Embodiments of the Invention

The invention comprises the following embodiments:

1. A phenolic resin composition C comprising

- at least one of

   (a) phenolic resins **R** which are condensation products from at least one phenolic compound **P** and at least one aldehyde **A,**
   (b) condensation products **R'** of at least one of the naturally occurring hydroxyaromatic compounds lignin **L** and tannin **T,** optionally together with at least one of the said phenolic compounds **P,** with at least one aldehyde **A,** and
   (c) mixtures of one or more phenolic resins **R** and one or more condensation products **R',**

- at least one scavenger composition **S** which scavenger composition comprises at least one compound selected from the group consisting of

   - cyclic carbamide compounds **S1** having at least one -C(O)-N< group,
   - linear or branched carbamide compounds **S2** having at least one -C(O)-N< group,
   - thiocarbamide compounds **S3** having at least one -C(S)-N< group, and
   - imidocarbamide compounds **S4** having at least one -C(NH)-N< group,

with the proviso that if urea is present in the scavenger composition **S,** there must be at least one further compound present in the scavenger composition **S,** which further compound is different from urea, and is selected from any of the groups **S1, S2, S3,** and **S4.**

2. The phenolic resin composition **C** as described in embodiment 1, wherein the at least one phenol **P** has at least one, and not more than three, hydroxyl groups, and is selected from the group consisting of monohydric phenols which are preferably selected from the group consisting of phenol (hydroxybenzene) itself, ortho-, meta-, and para-cresol, alkylphenols having at least one linear or branched alkyl group in at least one of the 2-, 3-, or 4-positions relative to the hydroxyl group with from two to twenty carbon atoms, which may optionally have at least one olefinic unsaturation in the alkyl group, alkoxy phenols having at least one linear or branched alkoxy group in at least one of the 2-, 3-, or 4-positions relative to the hydroxyl group with from two to six carbon atoms, and of dihydric phenols which are preferably selected from the group consisting of resorcinol, and bisphenol A, and trihydric phenols which are preferably selected from the group consisting of 1,2,3-trioxybenzene, 1,2,4-trioxybenzene, 1,2,5-trioxybenzene, and 1,3,5-trioxybenzene.

3. The phenolic resin composition C as described in embodiment 1 or in embodiment 2, wherein the at least one aldehyde A has at least one, and not more than two, aldehyde groups -C(H)=O, and is selected from the group consisting of aliphatic monoaldehydes Al-CHO having from one to six carbon atoms in the linear or branched aliphatic group Al, preferably formaldehyde, propionaldehyde, and n-butyraldehyde, and of aliphatic dialdehydes OHC-Al'-CHO where Al' stands for a linear or branched alkylene group having from one to six carbon atoms, or for a direct bond in the case of glyoxal, preferably glyoxal, succinaldehyde and glutaraldehyde, and of cyclic aldehydes such as furfural, and 5-hydroxymethyl furfural, and mixtures of any one aldehyde with any one or more than one of the above aldehydes.

4. The phenolic resin composition C as claimed in any one of the preceding embodiments, where the lignin **L** is selected from the group consisting of Kraft lignin (or sulphate lignin), alkali lignin (or soda lignin), hydrolysis lignin, including the so-called acid hydrolysis lignin, organosolv lignin, steam-explosion lignin, and ammonia-fibre expansion lignin, and their mixtures.

5. The phenolic resin composition **C** as claimed in any one of the preceding embodiments, where the tannin **T** is selected from the group consisting of gallotannins, ellagitannins, complex tannins and condensed tannins, and their mixtures.

6. The phenolic resin composition **C** as claimed in any one of the preceding embodiments, wherein the at least one compound **S1** is selected from the group consisting of ethyleneurea, propyleneurea, glycoluril (tetrahydro-imidazo[4,5-d]imidazole-2,5(1H,3H)-dione), and 1,2-ethylidene bis(imidazolidine-N-yl).

7. The phenolic resin composition **C** as claimed in any one of the preceding embodiments, wherein the at least one compound **S2** is selected from the group consisting of urea, alkylated ureas with $C_1$- to $C_9$- linear or branched alkyl groups such as N-methylurea, N-ethylurea, 1,1-dimethylurea, 1,3-dimethylurea, 1,1-diethylurea, 1,3-diethylurea, 1,1-di-n-butylurea, 1,3-di-n-butylurea, biuret (2-imidodicarbonic diamide) $H_2N-C(O)-NH-C(O)-NH_2$, and triuret (2,4-diimido-tricarbonic diamide) $H_2N-[C(O)-NH-]_3-H$, and also bisamides of aliphatic dicarboxylic acids such as oxalic acid, malonic acid, succinic acid, glutaric acid, and adipic acid.

8. The phenolic resin composition **C** as claimed in any one of the preceding embodiments, wherein the at least one compound **S3** is selected from the group consisting of thiourea, alkylated thioureas with $C_1$- to $C_9$- linear or branched alkyl groups such as N-methylthiourea, N-ethylthiourea, 1,1-dimethylthiourea, 1,3-dimethylthiourea, 1,1-diethylthiourea, 1,3-diethylthiourea, 1,1-di-n-butylthiourea, 1,3-di-n-butylthiourea, thioethylene urea (imidazoline-2-thiol), thiopropylene urea (4-methyl-imidazolidine-2-thione), dithioglycoluril (tetrahydro-imidazo[4,5-d]imidazole-2,5(1H,3H)-dithione), dithiobiuret (2-imido-1,3-dithiodicarbonic diamide), trithiotriuret (2,4-diimido-1,3,5-trithiotricarbonic diamide) and carbamodithioc acid, salts thereof, and esters thereof with alkanols having from six to twenty carbon atoms, and esters of alkanols having from six to twenty carbon atoms with alkylenebisdithiocarbamates having alkylene groups of from two to six carbon atoms.

9. The phenolic resin composition **C** as claimed in any one of the preceding embodiments, wherein the at least one compound **S4** having an iminocarbamide or amidine structure -C(NH)-N<, is selected from the group consisting of formamidine H-C(NH)-NH$_2$, acetamidine CH$_3$-C(NH)-NH$_2$, bisamidines of dicarboxylic acids such as succinic acid, glutaric acid, adipic acid, guanidine $H_2N-C(NH)-NH_2$, alkylated guanidines with $C_1$- to $C_9$- linear or branched alkyl groups such as N-methylguanidine, N-ethylguanidine, 1,1-dimethylguanidine, 1,3-dimethylguanidine, 1,1-diethylguanidine, 1,3-diethylguanidine, 1,1-di-n-butylguanidine, 1,3-di-n-butylguanidine, aminoguanidine, dicyandiamide (cyanoguanidine $(H_2N)_2$ C=N-C=N), biguanide (imidodicarbonimidic diamide $H_2N-C(NH)-N(H)-C(NH)-NH_2$), and 1,2-diaminoguanidine $H_2N-N(H)-C(NH)-N(H)-NH_2$, and also cyclic amidines such as melamine (1,3,5-triamino-2,4,6-triazine), aryl triazines like benzoguanamine (6-phenyl-1,3,5-triazine-1,4-diamine), and alkyl triazines like formoguanamine (1,3,5-triazine-2,4-diamine), acetoguanamine (6-methyl-1,3,5-triazine-2,4-diamine), and caprinoguanamine (6-nonyl-1,3,5-triazine-2,4-diamine).

10. The phenolic resin composition **C** as claimed in any one of the preceding embodiments, wherein at least 10 % of the mass of scavenger composition S is urea, and at least 10 % of the mass of the scavenger composition is thiourea.

11. A process for the preparation of a phenolic resin composition **C** according to one more of the preceding embodiments, comprising admixing to at least one of

- at least one of

    (a) phenolic resins **R** which are condensation products from at least one phenolic compound **P** and at least one aldehyde **A,**
    (b) condensation products **R'** of at least one of the naturally occurring hydroxyaromatic compounds lignin **L** and tannin **T,** optionally together with at least one of the said phenolic compounds **P,** with at least one aldehyde **A,** and
    (c) mixtures of one or more phenolic resins **R** and one or more condensation products **R',**

    - at least one scavenger composition **S** which scavenger composition comprises at least one compound selected from the group consisting of
    - cyclic carbamide compounds **S1** having at least one -C(O)-N< group,
    - linear or branched carbamide compounds **S2** having at least one -C(O)-N< group,
    - thiocarbamide compounds **S3** having at least one -C(S)-N< group, and
    - imidocarbamide compounds **S4** having at least one -C(NH)-N< group, wherein the admixing step of the formaldehyde scavenger compounds is conducted either together as scavenger composition **S,** or consecutively as individual compounds belonging to the groups **S1, S2, S3,** or **S4,** to the phenolic resins **R,** the condensation products **R',** and/or their mixtures, or their solutions, after completion of the synthesis of **R,** or **R',** with the proviso that if urea is present in the scavenger composition **S,** there must be at least one further compound present in the scavenger composition **S,** which further compound is different from urea, and is selected from any of the groups **S1, S2, S3,** and **S4.**

12. The process of embodiment 11 wherein the sum $w_S$ of the mass fractions of all additives, viz., all scavenger compounds **S** present in the composition **C,** further including phenolic bodies, which are selected from the group consisting of phenolic resins **R,** condensation products **R',** and mixtures thereof, is $w_{US} = (m_U + m_S) / (m_U + m_S + m_R + m_{R'})$, where $m_U$ is the mass of urea, $m_S$ is the sum of the masses of all scavenger compounds **S,** $m_R$ is the mass of phenolic resins, and $m_{R'}$ is the mass of condensation products **R',** each as present in the composition, is given by 0.5 g/kg $< w_S \leq$ 350 g/kg, preferably 1 g/kg $\leq w_S \leq$ 300 g/kg, and particularly preferred, 5 g/kg $\leq w_S \leq$ 250 g/kg.

13. A method of use of the phenolic resin composition **C** according to one or more of embodiments 1 to 10, or made by the process of claims 11 or 12, for the preparation of binders for glass or mineral fibres, as fillers for laminates, as binders or adhesives in composite wood materials, such as wood based boards, plywood, laminated veneer lumber "LVL", as impregnant, as binder in coatings, in insulation foam, in floral foam, as foundry resins, in abrasive materials, in bonded abrasive materials, in friction materials, for refractory materials, and in moulding compounds.

Examples

**Examples 1 to 4**

Resole resins R1, R2, R3, and R4 were prepared with varied ratios $n_F / n_P$ of the amount of substance of formaldehyde $n_F$ and the amount of substance of phenol $n_P$, with values for this ratio of as given in table 1 (attached).

**Preparation of resole resins R1, R2, R3, and R4**

Into a reactor equipped for atmospheric reflux, a first portion (a) of deionised water was added and heated to 60 °C. When this temperature had been reached, a portion (b) of an aqueous phenol solution with a mass fraction of phenol as indicated in table 1 was added, followed by a portion (c) of an aqueous solution of NaOH with a mass fraction of NaOH as indicated in table 1. The combined mixture was again heated to 60 °C. Then, a portion (d) of an aqueous formaldehyde solution with a mass fraction of formaldehyde of as indicated in table 1 was slowly added over ninety minutes, keeping the temperature at 60 °C. When the addition of formaldehyde was complete, the mixture was heated to 67 °C and stirred at this temperature while monitoring the mass fraction of free phenol in the mixture as measured by gas chromatography. As soon as a mass fraction of free phenol of below 2.2 % was achieved, the reaction mixture comprising a phenol-formaldehyde condensate (PF) was cooled down to 45 °C, and a further portion (e) of deionised water was added.
Aqueous solutions of resole resins R1, R2, R3, and R4 were prepared according to this procedure following the list of masses $m_B$ of educts B (starting materials, in these cases: deionised water "H$_2$O deion." (a) and (e); aqueous solution of phenol "Phenol ws" (b); aqueous solution of sodium hydroxide "NaOH ws" (c); and aqueous solution of formaldehyde "CH$_2$O ws"(d) as summarised in Table 1 for each one the resole resins R1, R2, R3 and R4. Table 1 also shows the calculated values, viz., the totals of the mass of educts used in the synthesis, the masses of solids in the educt solutions as supplied, for each of the educts B, and the total mass of water used "H$_2$O total" which is the sum of the masses of water "H$_2$O pure" as added as (a) and (e), and "H$_2$O ex ws" present in the educt solutions as supplied, as calculated from the mass m of the solution used, and the mass fraction $w_B$ of the educt B in the educt solution.
Likewise, the ratio of the amount of substance of formaldehyde $n_F$ and the amount of substance of phenol $n_P$ is calculated using the molar masses $M_B$ of the educts B.

**Binder Solutions with Carbamide / Thiocarbamide / Imidocarbamide Additives**

Binder solutions L4, L3, L2, and L1 of the above resole resins were completed by adding solid ammonium sulphate (NH$_4$)$_2$SO$_4$ in an amount of substance $n_{AS} = 1.1 \times 0.5 \times n_{NaOH}$, where $n_{NaOH}$ is the amount of substance of sodium hydroxide used in the synthesis of the resole, further deionised water to dilute the solution to a mass fraction of solids $w_{solids} = 5$ % in the solution comprising the solid resin formed, and the ammonium sulphate added, together having a mass of $m_{solids}$, and additionally, a mass $m_{A,s} = 4 \times 0.0035 \times m_{solids}$ of an aqueous solution of ammonia having a mass fraction of ammonia $w_A$ of 25 %, the latter being the ratio of the mass $m_A$ of ammonia NH$_3$ present in the solution, and the mass $m_{A,s}$ of the ammonia solution used:

$$w_A = m_A / m_{A,s} \, .$$

Portions of 80 g each of these solutions L1, L2, L3, and L4 were combined with a total of 20 g of the formaldehyde scavengers **S** selected from urea, thiourea, ethyleneurea, and thioethyleneurea to prepare the samples as listed in table 2 (attached), and homogenised by stirring. The ready samples were then cooled to ambient temperature (20 °C). Free phenol and free formaldehyde were determined in these samples, see table 2. In some cases, no stable solutions were achieved. These are marked as "n.s." (not stable) in the column for "water dilutability".

**Emissions during curing**

The resin solutions so prepared were cured at 200 °C, the emissions were captured in water and afterwards photometrically determined as follows.

A portion of each of the samples with a mass of between 0.2 g and 0.3 g prepared according to table 2 was dropped onto binder-free borosilicate circular glass fibre filter disks having a diameter of 90 mm, and a thickness of ca. 0.3 mm (Pall Corp., type A/E; product ID: 61664; air flow rate at 70 kPa: ca. 60 L/[min × cm2]), and the wetted filter disks were folded and inserted into a test tube. For all samples individually, test tubes with the wetted filter were put into an Erlenmeyer flask that was closed except for an inlet and an outlet air tube. The outlet tube emerges on one side into the test tube, on the other side it is connected to a heated hose. The Erlenmeyer flask was put into an oven of 200 °C, the emissions are let out of the oven via the hose into three gas flasks connected in series. The first two flasks are each filled with 100 mL of distilled water. The contents of the first two water flasks in which the emitted gases were absorbed, were combined, and the absorbed formaldehyde and ammonia emissions in the water were photometrically determined. The masses of detected formaldehyde and ammonia were set into relation of the solids in the cured resin and are, therefore, independent of the solid content of the resin. Photometric determination was done using a DR 6000 Photometer and Dr. Lange Testkits (testkit LCK 325 for formaldehyde and LCK 303 for ammonium). The results from these tests are summarised in Table 2 (attached).

**Emissions from the cured binder**

These samples were then used to impregnate binder-free borosilicate circular glass fibre filters having a diameter of 90 mm, and a thickness of ca. 0.3 mm (Pall Corp., type A/E; product ID: 61664; air flow rate at 70 kPa: ca. 60 L/[min × cm$^2$]). Impregnation was supported by placing the glass fibre filters in a Büchner funnel, with a pressure gradient relative to ambient of - 80 kPa. After impregnation, the filters were cured at 200 °C in an air circulation oven for five minutes. The weights of the filters were measured before impregnation with the binder mixture and after curing.

To 1 litre screw cap bottles, 50 ml of distilled water were added. To each bottle, an individual impregnated glass filter with cured resin was securely suspended above the surface of the water phase. The screw top was then securely tightened. The bottles were placed in a 20 °C climate chamber for twenty hours. Afterwards, the formaldehyde and ammonia emissions were photometrically determined from that which was absorbed by the water. The masses $m_F$ and $m_A$ of formaldehyde and ammonia as stated in table 2 were calculated by relating to the mass fraction of 5 % of the solids in the cured resin and were therefore independent of the solid content of the resin. Photometrical determination was done using a DR 6000 Photometer and Dr. Lange Testkits (testkit LCK 325 for formaldehyde and LCK 304 for ammonium). The results from these tests are summarised in Table 2 (attached).

Tables 1 and 2 are attached.

**Example 5**

In a further experiment, the emissions from the binder (resole solution L50 without additives, and resole solutions L51, L52, L53 and L54 with additives added to the resole solution (mass fraction of additives was 20 % for each of of the additives urea, thiourea, ethyleneurea and ethylenethiourea, and 80 % of the resole solution L50).

**Preparation of the resole solutions L50, L51, L52, L53, and L54:**

**Preparation of resole resin**

Into a reactor equipped for atmospheric reflux, a first portion (a) of 93.5 g of deionised water was added and heated to 60 °C. When this temperature had been reached, a portion (b) of 378.4 g of an aqueous phenol solution with a mass fraction of phenol of 92.6 % was added, followed by a portion (c) of 71.8 g of an aqueous solution of NaOH with a mass fraction of NaOH of 50 %. The combined mixture was again heated to 60 °C. Then, a portion (d) of 821.8 g of an aqueous formaldehyde solution with a mass fraction of formaldehyde of 54.4 % was slowly added over ninety minutes, keeping the temperature at 60 °C. When the addition of formaldehyde was complete, the mixture was heated to 67 °C and stirred at this temperature while monitoring the mass fraction of free phenol in the mixture as measured by gas chromatography. As soon as a mass fraction of free phenol of below 2 % was reached, the reaction mixture comprising a phenol-formaldehyde condensate (PF) was cooled down to 45 °C, and a further portion (e) of 74.5 g of deionised water was added. This mixture is referred to as mixture M5. The recipe for synthesis is shown in table 3, top part. Table 3 is attached hereto.

This resin mixture was divided into a L50 solution of 100 g of M5 without addition, and 4 portions L51, L52, L53, and L54 of 80 g each of the resin solution M5, and 20 g each of separate additions of urea (for L51), thiourea (for L52), ethyleneurea (for L53), and thioethyleneurea (for L54) were then prepared as listed in table 3, middle part.

Each of these solution was then mixed with an amount of substance $n_{AS}$ of ammonium sulphate calculated as $n_{AS} = n_{NaOH} \times 0.5 \times 1.1$, where $n_{NaOH}$ is the amount of substance $n_{NaOH}$ of sodium hydroxide in these solutions. Additionally, a mass $m(NH_3,sol)$ of aqueous ammonia solution (having a mass fraction of ammonia of 25 %) was added to these solutions, where $m(NH_3) = 0.0035 \times m(PF)$ (the mass of ammonia $NH_3$ equals 0.35 % of the mass $m(PF)$ of the phenolic resin these solutions). The solutions were then cooled to 20 °C, and diluted with deionised water to a mass fraction of 5 %. These solutions were the used to determine the emissions during curing, and after curing, as described supra. The results of these experiments are listed in table 3, lowest part.

# Table 1

**Resin Solution L2 Preparation; F/P = 2.6**

| | Educts B | $M_B$/(g·mol⁻¹) | Mass of educts B in the form as supplied $m$/g | Mass fraction of solids in educts B $w_B$/% | Mass of solids in educts B $m_B$/g | Mass of solvent S (water) in educts B $m_S$/g | Amount of substance of solids in educts B $n_B$/mol |
|---|---|---|---|---|---|---|---|
| a | H₂O deion. | 18.015 | 87.1 | 100 | 87.1 | 0 | 4.835 |
| b | Phenol ws | 94.113 | 801.6 | 92.2 | 739.0752 | 62.5248 | 7.853 |
| c | NaOH ws | 39.997 | 111.6 | 50 | 55.8 | 55.8 | 1.395 |
| d | CH₂O ws | 30.026 | 1137.5 | 53.9 | 613.1125 | 524.3875 | 20.419 |
| e | H₂O deion. | 18.015 | 102.2 | 100 | 102.2 | 0 | 5.673 |
| | **Calculated values** | | | | | | |
| | Total mass | | 2240 | | | | |
| | H₂O ex ws | | | | | 642.712 | |
| | H₂O pure | | | | | 189.300 | |
| | H₂O total | | | | | 832.012 | |
| | $m$(Solids)/g = total mass of solids | | | | | | 1407.988 |
| | $w$(Solids) = $m$(Solids) / $m$(Solution) | | | | | | 0.629 |
| | $n_F$ / $n_P$ = ratio of amount of substance of F (formaldehyde) and of P (Phenol) | | | | | | 2.600 |
| | Addition of Ammoniumsulfate | | | | | $n_{AS}$ / mol 0.767 | $m_{AS}$ / g 101.39 |

**Resin Solution L1 Preparation; F/P = 1.9**

| | Educts B | $M_B$/(g·mol⁻¹) | $m$ / g | $w_B$ / % | $m_B$ / g | $m_S$ / g | $n_B$ / mol |
|---|---|---|---|---|---|---|---|
| a | H₂O deion. | 18.015 | 36.8 | 100 | 36.8 | 0 | 2.043 |
| b | Phenol ws | 94.113 | 957.6 | 92.8 | 888.6528 | 68.9472 | 9.442 |
| c | NaOH ws | 39.997 | 111.6 | 50 | 55.8 | 55.8 | 1.395 |
| d | CH₂O ws | 30.026 | 990.7 | 54.4 | 538.9408 | 451.7592 | 17.949 |
| e | H₂O deion. | 18.015 | 102.2 | 100 | 102.2 | 0 | 5.673 |
| | **Calculated values** | | | | | | |
| | Total mass | | 2198.9 | | | | |
| | H₂O ex ws | | | | | 576.506 | |
| | H₂O pure | | | | | 139.000 | |
| | H₂O total | | | | | 715.506 | |
| | $m$(Solids)/g = total mass of solids | | | | | | 1483.394 |
| | $w$(Solids) = $m$(Solids) / $m$(Solution) | | | | | | 0.675 |
| | $n_F$ / $n_P$ = ratio of amount of substance of F (formaldehyde) and of P (Phenol) | | | | | | 1.901 |
| | Addition of Ammoniumsulfate | | | | | $n_{AS}$ / mol 0.767 | $m_{AS}$ / g 101.39 |

**Resin Solution L4 Preparation; F/P = 4**

| | Educts B | $M_B$/(g·mol⁻¹) | Mass of educts B in the form as supplied $m$ / g | Mass fraction of solids in educts B $w_B$ / % | Mass of solids in educts B $m_B$ / g | Mass of solvent S (water) in educts B $m_S$ / g | Amount of substance of solids in educts B $n_B$ / mol |
|---|---|---|---|---|---|---|---|
| a | H₂O deion. | 18.015 | 142.9 | 100 | 142.9 | 0 | 7.932 |
| b | Phenol ws | 94.113 | 591.2 | 92.2 | 545.0864 | 46.1136 | 5.792 |
| c | NaOH ws | 39.997 | 111.7 | 50 | 55.85 | 55.85 | 1.396 |
| d | CH₂O ws | 30.026 | 1278.4 | 54.4 | 695.4496 | 582.9504 | 23.162 |
| e | H₂O deion. | 18.015 | 115.9 | 100 | 115.9 | 0 | 6.434 |
| | **Calculated values** | | | | | | |
| | Total mass | | 2240.1 | | | | |
| | H₂O ex ws | | | | | 684.914 | |
| | H₂O pure | | | | | 258.800 | |
| | H₂O total | | | | | 943.714 | |
| | $m$(Solids)/g = total mass of solids | | | | | | 1296.386 |
| | $w$(Solids) = $m$(Solids) / $m$(Solution) | | | | | | 0.579 |
| | $n_F$ / $n_P$ = ratio of amount of substance of F (formaldehyde) and of P (Phenol) | | | | | | 3.999 |
| | Addition of Ammoniumsulfate | | | | | $n_{AS}$ / mol 0.768 | $m_{AS}$ / g 101.48 |

**Resin Solution L3 Preparation; F/P = 3.3**

| | Educts B | $M_B$/(g·mol⁻¹) | $m$ / g | $w_B$ / % | $m_B$ / g | $m_S$ / g | $n_B$ / mol |
|---|---|---|---|---|---|---|---|
| a | H₂O deion. | 18.015 | 112.5 | 100 | 112.5 | 0 | 6.245 |
| b | Phenol ws | 94.113 | 680.5 | 92.2 | 627.421 | 53.079 | 6.667 |
| c | NaOH ws | 39.997 | 111.4 | 50 | 55.7 | 55.7 | 1.393 |
| d | CH₂O ws | 30.026 | 1225.5 | 53.9 | 660.5445 | 564.9555 | 21.999 |
| e | H₂O deion. | 18.015 | 110.1 | 100 | 110.1 | 0 | 6.112 |
| | **Calculated values** | | | | | | |
| | Total mass | | 2240 | | | | |
| | H₂O ex ws | | | | | 673.735 | |
| | H₂O pure | | | | | 222.600 | |
| | H₂O total | | | | | 896.335 | |
| | $m$(Solids)/g = total mass of solids | | | | | | 1343.666 |
| | $w$(Solids) = $m$(Solids) / $m$(Solution) | | | | | | 0.600 |
| | $n_F$ / $n_P$ = ratio of amount of substance of F (formaldehyde) and of P (Phenol) | | | | | | 3.300 |
| | Addition of Ammoniumsulfate | | | | | $n_{AS}$ / mol 0.766 | $m_{AS}$ / g 101.21 |

Table 2

| sample number | mass resol | ratio formaldehyde phenol | mass urea | mass thiourea | mass ethyl-ene- urea | mass thio eth-yleneurea | mass fraction of solids $w_{Solids}=$ $m_{Solids}/$ $m_{Soln}$ | value of pH | water diluta-bility | Free F $w/$ (g/kg) | Free P $w/$ (g/kg) | emission DURING curing $w_F/$ (mg/g) | $w_A/$ (mg/g) | emission from binder AFTER cur-ing $m_F/\mu g$ | $m_A/\mu g$ |
|---|---|---|---|---|---|---|---|---|---|---|---|---|---|---|---|
| | $m$/g | $n_F/n_P$ | $m_U$/g | $m_{TU}$/g | $m_{EU}$/g | $m_{ETU}$/g | | | | | | | | | |
| 1 | 80 | 4 | 20 | 0 | 0 | 0 | 0.554 | 9.6 | $\infty$ | 4.60 | 1.70 | 13.90 | 23.20 | 831.80 | 101.20 |
| 2 | 80 | 4 | 10 | 10 | 0 | 0 | 0.555 | 9.6 | $\infty$ | 23.50 | 1.60 | 22.20 | 19.40 | 355.80 | 62.30 |
| 3 | 80 | 4 | 5 | 15 | 0 | 0 | 0.552 | 9.7 | $\infty$ | 20.70 | 1.60 | 32.80 | 18.80 | 255.20 | 53.10 |
| 4 | 80 | 4 | 0 | 20 | 0 | 0 | 0.555 | 9.7 | $\infty$ | 10.30 | 1.60 | 66.30 | 17.50 | 196.80 | 31.00 |
| | | | | | | | | | | | | | | | |
| 5 | 80 | 4 | 20 | 0 | 0 | 0 | 0.554 | 9.6 | $\infty$ | 4.60 | 1.70 | 13.90 | 23.20 | 831.80 | 101.20 |
| 6 | 80 | 4 | 10 | 0 | 10 | 0 | 0.56 | 9.6 | $\infty$ | 6.80 | 1.70 | 26.00 | 9.00 | 580.40 | 87.20 |
| 7 | 80 | 4 | 5 | 0 | 15 | 0 | 0.558 | 9.6 | $\infty$ | 4.80 | 1.70 | 53.50 | 6.00 | 336.40 | 51.50 |
| 8 | 80 | 4 | 0 | 0 | 20 | 0 | 0.558 | 9.6 | $\infty$ | 4.90 | 1.70 | 100.04 | 2.00 | 184.60 | 17.10 |
| | | | | | | | | | | | | | | | |
| 9 | 80 | 4 | 20 | 0 | 0 | 0 | 0.554 | 9.6 | $\infty$ | 4.60 | 1.70 | 13.90 | 23.20 | 831.80 | 101.20 |
| 10 | 80 | 4 | 10 | 0 | 0 | 10 | 0.569 | 9.5 | $\infty$ | 9.90 | 1.70 | 37.40 | 8.90 | 328.90 | 57.30 |
| 11 | 80 | 4 | 5 | 0 | 0 | 15 | 0.575 | 9.6 | $\infty$ | 8.50 | 1.70 | 81.30 | 7.40 | 226.70 | 47.40 |
| 12 | 80 | 4 | 0 | 0 | 0 | 20 | 0.577 | 9.6 | $\infty$ | 5.20 | 1.70 | 114.70 | 1.70 | 123.50 | 11.40 |
| | | | | | | | | | | | | | | | |
| 13 | 80 | 3.3 | 20 | 0 | 0 | 0 | 0.561 | 9.4 | $\infty$ | 2.45 | 3.60 | 5.62 | 34.69 | 508.10 | 95.70 |
| 14 | 80 | 3.3 | 10 | 10 | 0 | 0 | 0.563 | 9.3 | $\infty$ | 10.86 | 3.60 | 6.57 | 25.11 | 260.00 | 63.10 |
| 15 | 80 | 3.3 | 5 | 15 | 0 | 0 | 0.564 | 9.5 | $\infty$ | 9.48 | 3.60 | 8.96 | 21.30 | 193.00 | 48.10 |
| 16 | 80 | 3.3 | 0 | 20 | 0 | 0 | 0.555 | 9.4 | $\infty$ | 5.40 | 3.60 | 27.09 | 17.45 | 180.70 | 39.00 |
| | | | | | | | | | | | | | | | |
| 17 | 80 | 3.3 | 20 | 0 | 0 | 0 | 0.561 | 9.4 | $\infty$ | 2.45 | 3.60 | 5.62 | 34.69 | 508.10 | 95.70 |

(continued)

| sample number | mass resol $m$/g | ratio formaldehyde phenol $n_F/n_P$ | mass urea $m_U$/g | mass thiourea $m_{TU}$/g | mass ethylene-urea $m_{EU}$/g | mass thio ethyleneurea $m_{ETU}$/g | mass fraction of solids $w_{Solids} = m_{Solids}/m_{Soln}$ | value of pH | water dilutability | Free F $w$/(g/kg) | Free P $w$/(g/kg) | emission DURING curing $w_F$/(mg/g) | emission DURING curing $w_A$/(mg/g) | emission from binder AFTER curing $m_F$/μg | emission from binder AFTER curing $m_A$/μg |
|---|---|---|---|---|---|---|---|---|---|---|---|---|---|---|---|
| 18 | 80 | 3.3 | 10 | 0 | 10 | 0 | 0.573 | 9.4 | ∞ | 2.11 | 3.50 | 6.57 | 15.65 | 415.90 | 77.40 |
| 19 | 80 | 3.3 | 5 | 0 | 15 | 0 | 0.569 | 9.4 | ∞ | 2.38 | 3.50 | 15.33 | 6.53 | 284.20 | 35.90 |
| 20 | 80 | 3.3 | 0 | 0 | 20 | 0 | 0.583 | 9.4 | ∞ | 2.51 | 3.50 | 54.17 | 3.23 | 206.90 | 11.40 |
| 21 | 80 | 3.3 | 20 | 0 | 0 | 0 | 0.561 | 9.4 | ∞ | 2.45 | 3.60 | 5.62 | 34.69 | 508.10 | 49.10 |
| 22 | 80 | 3.3 | 10 | 0 | 0 | 10 | 0.583 | 9.4 | ∞ | 4.75 | 3.60 | 13.94 | 14.65 | 281.50 | 63.30 |
| 23 | 80 | 3.3 | 5 | 0 | 0 | 15 | 0.599 | 9.4 | ∞ | 2.74 | 3.60 | 26.78 | 6.41 | 161.70 | 50.10 |
| 24 | 80 | 3.3 | 0 | 0 | 0 | 20 | 0.61 | 9.5 | ∞ | 1.39 | 3.60 | 69.06 | 3.65 | 87.70 | 21.60 |
| 25 | 80 | 2.6 | 20 | 0 | 0 | 0 | 0.58 | 9.4 | ∞ | 0.63 | 5.50 | 1.45 | 56.39 | 438.30 | 77.20 |
| 26 | 80 | 2.6 | 10 | 10 | 0 | 0 | 0.584 | 9.4 | ∞ | 2.05 | 5.50 | 1.92 | 41.72 | 302.40 | 72.90 |
| 27 | 80 | 2.6 | 5 | 15 | 0 | 0 | 0.586 | 9.6 | ∞ | 1.23 | 5.50 | 1.91 | 36.38 | 90.70 | 51.10 |
| 28 | 80 | 2.6 | 0 | 20 | 0 | 0 | n.s. | n.s. | n.s. | n.s. | n.s. | n.s. | n.s. | n.s. | n.s. |
| 29 | 80 | 2.6 | 20 | 0 | 0 | 0 | 0.58 | 9.4 | ∞ | 0.63 | 5.50 | 1.45 | 56.39 | 438.30 | 77.20 |
| 30 | 80 | 2.6 | 10 | 0 | 10 | 0 | 0.583 | 9.5 | ∞ | 0.85 | 5.40 | 1.75 | 29.57 | 272.90 | 66.80 |
| 31 | 80 | 2.6 | 5 | 0 | 15 | 0 | 0.586 | 9.5 | ∞ | 1.05 | 5.40 | 2.34 | 17.66 | 176.10 | 50.50 |
| 32 | 80 | 2.6 | 0 | 0 | 20 | 0 | 0.609 | 9.4 | ∞ | 1.02 | 5.40 | 3.15 | 2.81 | 93.20 | 20.90 |
| 33 | 80 | 2.6 | 20 | 0 | 0 | 0 | 0.58 | 9.4 | ∞ | 0.63 | 5.50 | 1.45 | 56.39 | 438.30 | 77.20 |
| 34 | 80 | 2.6 | 10 | 0 | 0 | 10 | 0.606 | 9.4 | ∞ | 0.12 | 5.50 | 1.72 | 29.62 | 199.80 | 63.60 |

(continued)

| sample number | mass resol | ratio formaldehyde phenol | mass urea | mass thiourea | mass ethyl- ene- urea | mass thio eth- yleneurea | mass fraction of solids | value of pH | water dilutability | Free F | Free P | emission DURING curing | | emission from binder AFTER curing | |
|---|---|---|---|---|---|---|---|---|---|---|---|---|---|---|---|
| | $m$ /g | $n_F/n_P$ | $m_U$/g | $m_{TU}$/g | $m_{EU}$/g | $m_{ETU}$ / g | $w_{Solids}$= $m_{Solids}$ / $m_{Soln}$ | | | $w$ / (g/kg) | $w$ / (g/kg) | $w_F$/ (mg/g) | $w_A$/ (mg/g) | $m_F$/μg | $m_A$/μg |
| 35 | 80 | 2.6 | 5 | 0 | 0 | 15 | n.s. | n.s. | n.s. | n.s. | n.s. | n.s. | n.s. | n.s. | n.s. |
| 36 | 80 | 2.6 | 0 | 0 | 0 | 20 | n.s. | n.s. | n.s. | n.s. | n.s. | n.s. | n.s. | n.s. | n.s. |
| | | | | | | | | | | | | | | | |
| 37 | 80 | 1.9 | 20 | 0 | 0 | 0 | 0.617 | 9.6 | ∞ | 1.21 | 15.20 | 0.22 | 74.40 | 215.90 | 86.60 |
| 38 | 80 | 1.9 | 10 | 10 | 0 | 0 | 0.631 | 10 | ∞ | 0.00 | 15.50 | 2.45 | 69.00 | 85.40 | 79.00 |
| 39 | 80 | 1.9 | 5 | 15 | 0 | 0 | n.s. | n.s. | n.s. | n.s. | n.s. | n.s. | n.s. | n.s. | n.s. |
| 40 | 80 | 1.9 | 0 | 20 | 0 | 0 | n.s. | n.s. | n.s. | n.s. | n.s. | n.s. | n.s. | n.s. | n.s. |
| | | | | | | | | | | | | | | | |
| 41 | 80 | 1.9 | 20 | 0 | 0 | 0 | 0.617 | 9.6 | ∞ | 1.21 | 15.20 | 0.22 | 74.40 | 215.90 | 86.60 |
| 42 | 80 | 1.9 | 10 | 0 | 10 | 0 | 0.618 | 10 | ∞ | 2.60 | 15.10 | 0.26 | 25.57 | 131.10 | 67.90 |
| 43 | 80 | 1.9 | 5 | 0 | 15 | 0 | 0.621 | 10 | ∞ | 0.90 | 15.10 | 0.43 | 21.66 | 70.70 | 62.70 |
| 44 | 80 | 1.9 | 0 | 0 | 20 | 0 | 0.63 | 10 | ∞ | 5.30 | 15.20 | 2.29 | 11.80 | 39.00 | 24.20 |
| | | | | | | | | | | | | | | | |
| 45 | 80 | 1.9 | 20 | 0 | 0 | 0 | 0.617 | n.s. | n.s. | n.s. | n.s. | n.s. | n.s. | n.s. | n.s. |
| 46 | 80 | 1.9 | 10 | 0 | 0 | 10 | 0.631 | n.s. | n.s. | n.s. | n.s. | n.s. | n.s. | n.s. | n.s. |
| 47 | 80 | 1.9 | 5 | 0 | 0 | 15 | n.s. | n.s. | n.s. | n.s. | n.s. | n.s. | n.s. | n.s. | n.s. |
| 48 | 80 | 1.9 | 0 | 0 | 0 | 20 | n.s. | n.s. | n.s. | n.s. | n.s. | n.s. | n.s. | n.s. | n.s. |

# Table 3

| Resin Solution L50 Preparation | | Mass of educts B in the form as supplied | Mass fraction of solids in educts B | Mass of solids in educts B | Mass of solvent S (water) in educts B | Amount of substance of solids in educts B |
|---|---|---|---|---|---|---|
| Educts B | $M_B/(g \cdot mol^{-1})$ | $m/g$ | $w_B/\%$ | $m_B/g$ | $m_S/g$ | $n_B/mol$ |
| a | H₂O deion. | 18.015 | 93.5 | 100 | 93.5 | 0 | 5.190 |
| b | Phenol ws | 94.113 | 378.4 | 92.6 | 350.3984 | 28.0016 | 3.723 |
| c | NaOH ws | 39.997 | 71.8 | 50 | 35.9 | 35.9 | 0.898 |
| d | CH₂O ws | 30.026 | 821.8 | 54.4 | 447.0592 | 374.7408 | 14.889 |
| e | H₂O deion. | 18.015 | 74.5 | 100 | 74.5 | 0 | 4.135 |
| **Calculated values** | | | | | | |
| Total masss | | 1440 | | | | |
| H₂O ex ws | | | | | 438.642 | |
| H₂O pure | | | | | 168.000 | |
| H₂O total | | | | | 606.642 | |
| $m$ (Solids) /g | = total mass of solids | | | | | 833.358 |
| $w$ (Solids) | = $m$ (Solids) / $m$ (Solution) | | | | | 0.579 |
| $n_F / n_P$ | = ratio of amount of substance of F (formaldehyde) and of P (Phenol) | | | | | 3.999 |
| Addition of Ammoniumsulfate | | | | | $n_{AS}$ / mol | $m_{AS}$ / g |
| | | | | | 0.494 | 65.23 |

| sample number | mass of resol solution L50 | ratio form-aldehyde phenol | mass urea | mass thiourea | mass ethylene-urea | mass thio-ethylene-urea | mass fraction of solids | value of pH | water diluta-bility |
|---|---|---|---|---|---|---|---|---|---|
| | $m$ / g | $n_F / n_P$ | $m_U$/ g | $m_{TU}$ / g | $m_{EU}$ / g | $m_{ETU}$ / g | $w_{Solids} =$ $m_{Solids} / m_{Soln}$ | | |
| 50 | 100 | 4 | 0 | 0 | 0 | 0 | 0.451 | 9.4 | ∞ |
| 51 | 80 | 4 | 20 | 0 | 0 | 0 | 0.551 | 9.5 | ∞ |
| 52 | 80 | 4 | 0 | 20 | 0 | 0 | 0.552 | 9.5 | ∞ |
| 53 | 80 | 4 | 0 | 0 | 20 | 0 | 0.564 | 9.5 | ∞ |
| 54 | 80 | 4 | 0 | 0 | 0 | 20 | 0.565 | 9.6 | ∞ |

| sample number | Free F | Free P | Free F | Free P | emission DURING curing | | emission from binder AFTER curing | |
|---|---|---|---|---|---|---|---|---|
| | $w$ / (dag/kg) | $w$ / (dag/kg) | $w$ / (g/kg) | $w$ / (g/kg) | $w_F$ / (mg/g) | $w_A$ / (mg/g) | $m_F$ / μg | $m_A$ / μg |
| 50 | 10.30 | 0.22 | 103.00 | 2.20 | 21.16 | 0.05 | 570.50 | 37.80 |
| 51 | 0.460 | 0.180 | 4.60 | 1.80 | 8.54 | 18.13 | 641.80 | 95.10 |
| 52 | 1.010 | 0.180 | 10.10 | 1.80 | 47.53 | 15.30 | 210.70 | 41.20 |
| 53 | 0.230 | 0.190 | 2.30 | 1.90 | 61.57 | 3.90 | 186.10 | 20.90 |
| 54 | 0.150 | 0.180 | 1.50 | 1.80 | 101.22 | 1.10 | 157.50 | 20.90 |

**Claims**

1. A phenolic resin composition **C** comprising

 - at least one of

   (a) phenolic resins **R** which are condensation products from at least one phenolic compound **P** and at least one aldehyde **A,**

(b) condensation products **R'** of at least one of the naturally occurring hydroxyaromatic compounds lignin **L** and tannin **T,** optionally together with at least one of the said phenolic compounds **P,** with at least one aldehyde **A,** and

(c) mixtures of one or more phenolic resins **R** and one or more condensation products **R',**

- at least one scavenger composition **S** which scavenger composition comprises at least one compound selected from the group consisting of

- cyclic carbamide compounds **S1** having at least one -C(O)-N< group,
- linear or branched carbamide compounds **S2** having at least one -C(O)-N< group,
- thiocarbamide compounds **S3** having at least one -C(S)-N< group, and
- imidocarbamide compounds **S4** having at least one -C(NH)-N< group,

with the proviso that if urea is present in the scavenger composition **S,** there must be at least one further compound present in the scavenger composition **S,** which further compound is different from urea, and is selected from any of the groups **S1, S2, S3,** and **S4.**

2. The phenolic resin composition **C** as claimed in claim 1, wherein the at least one phenol P has at least one, and not more than three, hydroxyl groups, and is selected from the group consisting of monohydric phenols which are preferably selected from the group consisting of phenol (hydroxybenzene) itself, ortho-, meta-, and para-cresol, alkylphenols having at least one linear or branched alkyl group in at least one of the 2-, 3-, or 4-positions relative to the hydroxyl group with from two to twenty carbon atoms, which may optionally have at least one olefinic unsaturation in the alkyl group, alkoxy phenols having at least one linear or branched alkoxy group in at least one of the 2-, 3-, or 4-positions relative to the hydroxyl group with from two to six carbon atoms, and of dihydric phenols which are preferably selected from the group consisting of resorcinol, and bisphenol A, and trihydric phenols which are preferably selected from the group consisting of 1,2,3-trioxybenzene, 1,2,4-trioxybenzene, 1,2,5-trioxybenzene, and 1,3,5-trioxybenzene.

3. The phenolic resin composition **C** as claimed in claim 1 or in claim 2, wherein the at least one aldehyde **A** has at least one, and not more than two, aldehyde groups -C(H)=O, and is selected from the group consisting of aliphatic monoaldehydes Al-CHO having from one to six carbon atoms in the linear or branched aliphatic group Al, preferably formaldehyde, propionaldehyde, and n-butyraldehyde, and of aliphatic dialdehydes OHC-Al'-CHO where Al' stands for a linear or branched alkylene group having from one to six carbon atoms, or for a direct bond in the case of glyoxal, preferably glyoxal, succinaldehyde and glutaraldehyde, and of cyclic aldehydes such as furfural, and 5-hydroxymethyl furfural, and mixtures of any one aldehyde with any one or more than one of the above aldehydes.

4. The phenolic resin composition **C** as claimed in any one of the preceding claims, where the lignin **L** is selected from the group consisting of Kraft lignin (or sulphate lignin), alkali lignin (or soda lignin), hydrolysis lignin, including the so-called acid hydrolysis lignin, organosolv lignin, steam-explosion lignin, and ammonia-fibre expansion lignin, and their mixtures.

5. The phenolic resin composition **C** as claimed in any one of the preceding claims, where the tannin **T** is selected from the group consisting of gallotannins, ellagitannins, complex tannins and condensed tannins, and their mixtures.

6. The phenolic resin composition **C** as claimed in any one of the preceding claims, wherein the at least one compound **S1** is selected from the group consisting of ethyleneurea, propyleneurea, and glycoluril (tetrahydro-imidazo[4,5-d]imidazole-2,5(1H,3H)-dione).

7. The phenolic resin composition **C** as claimed in any one of the preceding claims, wherein the at least one compound **S2** is selected from the group consisting of urea, biuret (2-imidodicarbonic diamide) $H_2N$-C(O)-NH-C(O)-$NH_2$, and triuret (2,4-diimido-tricarbonic diamide) $H_2N$-[C(O)-NH-]$_3$-H, and also bisamides of aliphatic dicarboxylic acids such as succinic acid, glutaric acid, and adipic acid.

8. The phenolic resin composition **C** as claimed in any one of the preceding claims, wherein the at least one compound **S3** is selected from the group consisting of thiourea, thioethylene urea (imidazoline-2-thiol), thiopropylene urea (4-methyl-imidazolidine-2-thione), dithioglycoluril (tetrahydro-imidazo[4,5-d]imidazole-2,5(1H,3H)-dithione), and carbamodithioc acid, salts thereof, and esters thereof with alkanols having from six to twenty carbon atoms, and esters of alkanols having from six to twenty carbon atoms with alkylenebisdithiocarbamates having alkylene groups of from two to six carbon atoms.

9.  The phenolic resin composition **C** as claimed in any one of the preceding claims, wherein the at least one compound **S4** having an iminocarbamide or amidine structure -C(NH)-N<, is selected from the group consisting of formamidine, acetamidine, guanidine, dicyandiamide (cyanoguanidine), biguanide (imidodicarbonimidic diamide), adipic acid bisamidimide, and 1,2-diaminoguanidine.

10.  The phenolic resin composition **C** as claimed in any one of the preceding claims, wherein at least 10 % of the mass of scavenger composition **S** is urea, and at least 10 % of the mass of the scavenger composition is thiourea.

11.  A process for the preparation of a phenolic resin composition **C** according to one more of the preceding claims, comprising admixing to at least one of

     - at least one of

          (a) phenolic resins **R** which are condensation products from at least one phenolic compound **P** and at least one aldehyde **A,**
          (b) condensation products **R'** of at least one of the naturally occurring hydroxyaromatic compounds lignin **L** and tannin **T,** optionally together with at least one of the said phenolic compounds **P,** with at least one aldehyde **A,** and
          (c) mixtures of one or more phenolic resins **R** and one or more condensation products **R',**

               - at least one scavenger composition **S** which scavenger composition comprises at least one compound selected from the group consisting of

                    - cyclic carbamide compounds **S1** having at least one -C(O)-N< group,
                    - linear or branched carbamide compounds **S2** having at least one -C(O)-N< group,
                    - thiocarbamide compounds **S3** having at least one -C(S)-N< group, and
                    - imidocarbamide compounds **S4** having at least one -C(NH)-N< group, wherein the admixing step of the formaldehyde scavenger compounds is conducted either together as scavenger composition **S,** or consecutively as individual compounds belonging to the groups **S1, S2, S3,** or **S4,** to the phenolic resins **R,** the condensation products **R',** and/or their mixtures, or their solutions, after completion of the synthesis of **R,** or **R',** with the proviso that if urea is present in the scavenger composition **S,** there must be at least one further compound present in the scavenger composition **S,** which further compound is different from urea, and is selected from any of the groups **S1, S2, S3,** and **S4.**

12.  The process of claim 11 wherein the sum $w_S$ of the mass fractions of all additives, viz., all scavenger compounds **S** present in the composition **C,** further including phenolic bodies, which are selected from the group consisting of phenolic resins **R,** condensation products **R',** and mixtures thereof, is $w_{US} = (m_U + m_S) / (m_U + m_S + m_R + m_{R'})$, where $m_U$ is the mass of urea, $m_S$ is the sum of the masses of all scavenger compounds **S,** $m_R$ is the mass of phenolic resins, and $m_{R'}$ is the mass of condensation products **R',** each as present in the composition, is given by 0.5 g/kg ≤ $w_S$ ≤ 350 g/kg, preferably 1 g/kg ≤ $w_S$ ≤ 300 g/kg, and particularly preferred, 5 g/kg ≤ $w_S$ ≤ 250 g/kg.

13.  A method of use of the phenolic resin composition **C** according to one or more of claims 1 to 10, or made by the process of claims 11 or 12, for the preparation of binders for glass or mineral fibres, as fillers for laminates, as binders or adhesives in composite wood materials, such as wood based boards, plywood, laminated veneer lumber "LVL", as impregnant, as binder in coatings, in insulation foam, in floral foam, as foundry resins, in abrasive materials, in bonded abrasive materials, in friction materials, for refractory materials, and in moulding compounds.

Europäisches
Patentamt

European
Patent Office

Office européen
des brevets

# EUROPEAN SEARCH REPORT

Application Number

EP 22 02 0628

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 699 639 A1 (SCHULLER INT INC [US]) 6 March 1996 (1996-03-06) | 1-9, 11-13 | INV. C08G8/10 |
| Y | * claims 1, 6, 8 * * example 1 * | 10 | C08G8/28 |
| X | JP 2005 054026 A (HONEN CORP) 3 March 2005 (2005-03-03) | 1-13 | ADD. C08H7/00 C09J161/06 |
| Y | * example 2 * * paragraph [0013] * * paragraph [0026] – paragraph [0027] * | 10 | C09J161/12 |
| X | WO 03/046036 A1 (GEORGIA PACIFIC RESINS [US]) 5 June 2003 (2003-06-05) | 1-9, 11-13 | |
| Y | * paragraph [0056] – paragraph [0059] * * claim 36 * | 10 | |
| X | CN 102 558 596 A (INST CHEM IND FOREST PROD CAF) 11 July 2012 (2012-07-11) | 1-9, 11-13 | |
| Y | * claim 1 * * example 1 * | 10 | |
| X | CN 101 191 039 A (UNIV LANZHOU [CN]) 4 June 2008 (2008-06-04) | 1-9, 11-13 | TECHNICAL FIELDS SEARCHED (IPC) C09J |
| Y | * example 2 * * claim 1 * | 10 | C08G C08H |

The present search report has been drawn up for all claims

| Place of search | Date of completion of the search | Examiner |
|---|---|---|
| Munich | 13 June 2023 | Laudi, Ines |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 22 02 0628

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2023

| Patent document cited in search report | | Publication date | Patent family member(s) | | Publication date |
|---|---|---|---|---|---|
| EP 0699639 | A1 | 06-03-1996 | CA | 2096617 A1 | 20-11-1993 |
| | | | EP | 0699639 A1 | 06-03-1996 |
| | | | JP | 2849335 B2 | 20-01-1999 |
| | | | JP | H0881241 A | 26-03-1996 |
| | | | US | 5358748 A | 25-10-1994 |
| | | | US | 5505998 A | 09-04-1996 |
| JP 2005054026 | A | 03-03-2005 | NONE | | |
| WO 03046036 | A1 | 05-06-2003 | AT | 412021 T | 15-11-2008 |
| | | | AU | 2002365376 A1 | 10-06-2003 |
| | | | BR | 0213995 A | 30-05-2006 |
| | | | EP | 1446434 A1 | 18-08-2004 |
| | | | US | 2003096922 A1 | 22-05-2003 |
| | | | WO | 03046036 A1 | 05-06-2003 |
| CN 102558596 | A | 11-07-2012 | NONE | | |
| CN 101191039 | A | 04-06-2008 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 1520951 A1
- DE 2363357 A1
- GB 359944 A
- GB 413439 A
- GB 423444 A
- GB 469677 A
- GB 475072 A
- GB 496125 A
- GB 506507 A
- GB 518858 A
- GB 567063 A
- GB 572829 A
- GB 589131 A
- GB 593372 A
- GB 772475 A
- GB 801300 A
- WO 2013144453 A1

**Non-patent literature cited in the description**

- **T. M. BENNET et al.** Low Formaldehyde Binders for Mineral Wool Insulation. *Global Challenges,* April 2022, vol. 6, https://doi.org/10.1002/gch2.202100110
- **LINPING WANG et al.** *Holzforschung,* 2019, vol. 73 (4), 363-369
- **KHANBABEE ; VAN REE.** *Natural Product Reports,* 2001, vol. 18, 641-649